# EUROPÄISCHE PATENTSCHRIFT

(11) **EP 2 325 993 B1**
(45) Veröffentlichungstag und Bekanntmachung des Hinweises auf die Patenterteilung: **01.07.2015**
(21) Anmeldenummer: 10170278.5
(22) Anmeldetag: 21.07.2010
(51) Int. Cl.: H02M 7/48

(54) **Verfahren zum Betreiben eines Wechselrichters und Wechselrichter**
Method for operating an inverter and inverter
Procédé destiné au fonctionnement d'un onduleur et onduleur

(30) Priorität: 01.10.2009 DE 102009047936
(43) Veröffentlichungstag der Anmeldung: 25.05.2011
(73) Patentinhaber: Dr. Johannes Heidenhain GmbH, 83301 Traunreut (DE)
(72) Erfinder: Schönlinner, Markus, 84529, Tittmoning (DE); Huber, Norbert, 83317, Teisendorf (DE)

(56) Entgegenhaltungen:
- WO-A1-2006/032694
- WO-A2-2005/109614
- DE-A1-102005 046 379
- US-A- 6 104 624

## Beschreibung

Die Erfindung betrifft ein Verfahren zum Betreiben eines Wechselrichters und einen hierfür geeigneten Wechselrichter. Solche Wechselrichter dienen dazu, eine vorliegende Gleichspannung in eine Wechselspannung umzuwandeln, etwa um diese in ein Wechselstromnetz einzuspeisen. Insbesondere bei der Anwendung im Bereich der Photovoltaik sind dabei möglichst hohe Wirkungsgrade gefordert.

Die WO 2006/032694 A1 offenbart einen Solarwechselrichter, der während einer positiven Halbwelle seiner Ausgangswechselspannung nach der Art einer Hoch-/Tiefsetzsteller-Kaskade, während einer negativenhalbwelle jedoch nach der Art eines Inverters angesteuert wird.

Einen weiteren Solarwechselrichter aus dem Stand der Technik zeigt die DE 102006010694 A1. Hier werden zwei Gleichspannungsquellen oder Solargeneratoren in Reihe geschaltet, der Verknüpfungspunkt bildet ein erstes Spannungsniveau oder eine Mittenspannung. Die beiden äußeren Anschlüsse der Solargeneratoren bilden jeweils ein positives bzw. negatives Spannungsniveau. Von diesen beiden Niveaus aus wird mittels je eines Hochsetzstellers die Generatorspannung über die maximale positive bzw. negative Netzspannung erhöht, falls die Generatorspannung niedriger ist als die maximale Netzspannung. Die Schaltung arbeitet also mit fünf verschiedenen, festen Spannungsniveaus. Die Netzphasen werden dann über Tiefsetzsteller aus dem jeweils betragsmäßig nächsthöheren Spannungsniveau versorgt, wobei der Freilauf über das betragsmäßig nächstniedrigere Spannungsniveau läuft. Neben dem relativ hohen Schaltungsaufwand ist von Nachteil, dass hier die Hochsetzsteller bzw. Tiefsetzsteller unnötige Schaltverluste produzieren, da in bestimmten Betriebszuständen die Generatorspannung auf einen Wert erhöht wird, von dem aus mittels eines Tiefsetzstellers das eigentlich benötigte Spannungsniveau erzeugt werden muss. Zudem werden zum Betrieb dieses Wechselrichters zwei Solargeneratoren benötigt, die eine möglichst gleiche Leistung liefern müssen. Dies ist z.B. bei einer Abschattung auf einem der Module nicht jederzeit gewährleistet.

In der DE 102007026393 B4 wird ein Solarwechselrichter beschrieben, bei dem ein Hochsetzsteller eine Generatorspannung zwar ständig auf ein höheres Niveau bringt, Leistung wird von diesem Niveau aber in einem erweiterten Betriebsmodus nur abgerufen, wenn die Generatorspannung so niedrig ist, dass eine Speicherdrossel nicht mehr wie gewünscht aufmagnetisiert werden kann. Der Hochsetzsteller arbeitet dabei mit einem festen Spannungsniveau, von dem aus wiederum ein Tiefsetzsteller das aktuell benötigte Spannungsniveau erzeugen muss.

Aufgabe der Erfindung ist es daher, ein Verfahren für den Betrieb eines Wechselrichters anzugeben, das einen verbesserten Wirkungsgrad ermöglicht, sowie einen Wechselrichter zu schaffen, mit dem dieses Verfahren ausgeführt werden kann.

Diese Aufgabe wird gelöst durch ein Verfahren zum Betreiben eines Wechselrichters und einen Wechselrichter mit einer Hochsetzstellerschaltung, einem Zwischenkreis und einer Tiefsetzstellerschaltung, für das Umwandeln einer Gleichspannung eines Solargenerators in eine Wechselspannung zum Einspeisen in ein Netz. Die Hochsetzstellerschaltung erhöht die Gleichspannung, wenn diese kleiner ist als der augenblickliche Wert der Netzspannung. Die Tiefsetzstellerschaltung erniedrigt eine Zwischenkreisspannung bei Bedarf auf eine im Netz gerade benötigte niedrigere Spannung. Die Hochsetzstellerschaltung erhöht dabei die Gleichspannung dynamisch auf den aktuell im Netz benötigten Wert und liefert somit zeitweise einen annähernd sinusförmigen Spannungsverlauf für die Zwischenkreisspannung. Wenn im Folgenden daher von einem dynamischen Zwischenkreis bzw. von einer dynamischen Zwischenkreisspannung die Rede ist, dann ist damit die zumindest zeitweise Anpassung der Zwischenkreisspannung an die gerade im Netz benötige Spannung gemeint, in Abgrenzung zu herkömmlichen Zwischenkreisen in ähnlichen Applikationen, bei denen der Zwischenkreis auf einer festen Spannung gehalten wird.

Der hier beschriebene Wechselrichter weist einen dynamischen Zwischenkreis auf, der vom Generator mit Gleichspannung versorgt wird, die durch zwei dem dynamischen Zwischenkreis vorgeschaltete symmetrische Hochsetzsteller erhöht wird, falls die benötigte Netzspannung über der Generatorspannung liegt. Aus dem dynamischen Zwischenkreis wird Energie ans Netz abgeben, wobei die abgegebene Spannung durch zwei dem dynamischen Zwischenkreis nachgeschaltete symmetrische Tiefsetzsteller erniedrigt wird, falls die dynamische Zwischenkreisspannung über dem aktuell benötigten Wert liegt.

Der Wechselrichter benötigt lediglich einen Solargenerator als Gleichspannungsquelle. Die Gleichspannung liegt symmetrisch zu einem mittleren Spannungsniveau. Liegt die vom Solargenerator abgegebene Gleichspannung niedriger als die aktuell benötigte Netzspannung, so erhöhen die Hochsetzsteller die Generatorspannung und damit die dynamische Zwischenkreisspannung gerade auf die benötigte Netzspannung. Somit wird vermieden, dass gleichzeitig ein Tiefsetzsteller in Betrieb genommen werden muss. Dieser arbeitet nur, wenn die Generatorspannung über der gerade benötigten Netzspannung liegt.

Die Schaltung kommt außerdem mit drei Spannungsniveaus aus, die Einspeisung geschieht vorzugsweise über das positive und das negative Spannungsniveau, der Rücklauf über das dazwischenliegende mittlere Spannungsniveau, das geerdet sein kann.

Mit dem bisher beschriebenen Ansatz lässt sich aus einem Solargenerator eine Phase eines Netzes speisen. Um ein z.B. ein dreiphasiges Netz zu speisen, kann diese Schaltung dreimal verwendet werden. Vorzugsweise werden die Phasen aber alle aus einem einzigen dynamischen Zwischenkreis versorgt. Dann gilt für die beiden einem jeweiligen Generator zugeordneten Hochsetzsteller, dass sie die Generatorspannung auf die höchste aller aktuell benötigten Phasenspannungen erhöhen müssen. Die einzelnen Phasen werden dann über separate Tiefsetzsteller versorgt, die die dynamische Zwischenkreisspannug auf die jeweils benötigte Phasenspannung absenken muss.

Weitere Vorteile sowie Einzelheiten der vorliegenden Erfindung ergeben sich aus der nachfolgenden Beschreibung verschiedener Ausführungsformen anhand der Figuren. Dabei zeigt
- Figur 1: eine Solarwechselrichterschaltung zur Einspeisung in eine Netzphase,
- Figur 2: verschiedene Arbeitsbereiche des Wechselrichters während einer Periode der Netzphase,
- Figur 3: eine Solarwechselrichterschaltung für mehrere Spannungsquellen und drei Netzphasen.

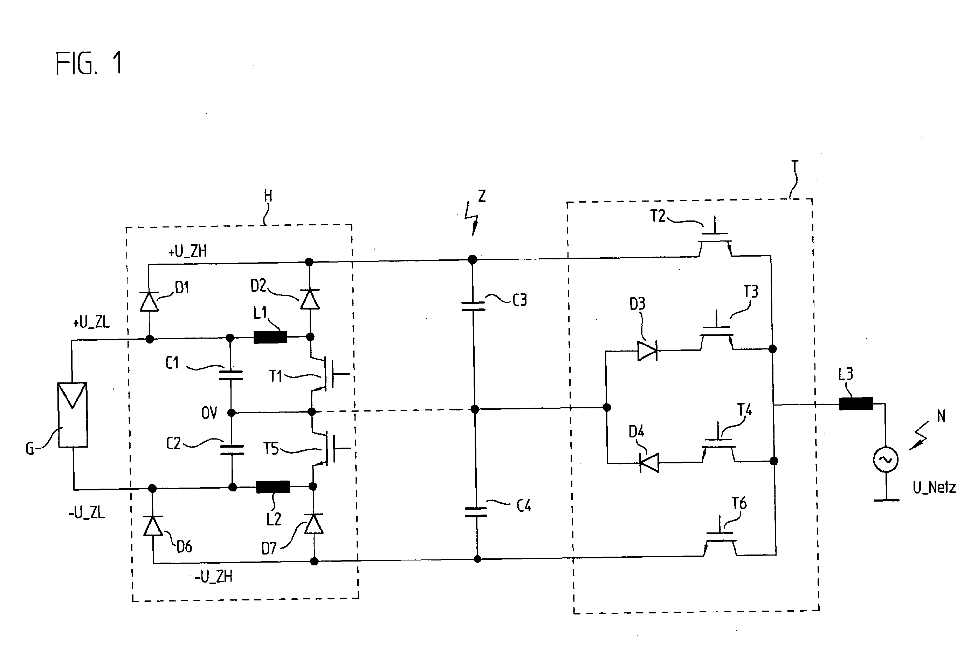

In Figur 1 ist ein Solargenerator G schematisch dargestellt. Dieser Solargenerator liefert eine Gleichspannung, die im Wesentlichen von der aktuellen Beleuchtungsstärke abhängt, aber auch von anderen Parametern wie der Betriebstemperatur oder dem Alter der Module M. Mittels zweier Kondensatoren C1 und C2, die in Reihe geschaltet und parallel zum Generator G liegen, wird ein mittleres Spannungsniveau geschaffen, das hier mit 0V bezeichnet ist. Dieses Niveau kann geerdet sein, es kann aber auch auf eine Erdung verzichtet werden. Ohne Erdung an der Verbindungsstelle von C1 und C2 treten am Generator G kleinere Spannungsrippel auf, wodurch der Arbeitspunkt am sogenannten Maximum Power Point, an dem der Solargenerator G den höchsten Wirkungsgrad hat, besser eingehalten werden kann, bzw. die Kapazität des dynamischen Zwischenkreises für den gleichen MPP-Wirkungsgrad kleiner gewählt werden kann.

Das positive Spannungsniveau +U_ZL des Generators G ist über eine erste Diode D1 mit einem dynamischen Zwischenkreis Z verbunden. Außerdem ist +U_ZL auch über eine Induktivität L1 und einen Halbleiterschaltelement T1 mit dem mittleren Spannungsniveau verbunden. Solange die Generatorspannung ausreicht, um den dynamischen Zwischenkreis Z mindestens auf die aktuell in der zu speisenden Phase des Netzes N benötigte Spannung zu laden, sperrt T1, und die Generatorspannung liegt über D1 am dynamischen Zwischenkreis an.

Ist die Generatorspannung hierfür jedoch zu niedrig, so wird ein gepulster Betrieb an T1 begonnen. Hierdurch fließt jeweils kurzzeitig ein Strom durch L1, der beim Abschalten von T1 zu einer erhöhten Spannung an L1 führt. Nach diesem bekannten Prinzip arbeitende Schaltungen, die eine Gleichspannung in eine höhere Gleichspannung transformieren, werden als Hochsetzsteller oder Step-Up-Converter bezeichnet. Zwischen L1 und T1 wird die erhöhte Spannung über eine zweite Diode D2 abgegriffen und dem dynamischen Zwischenkreis Z zugeführt. Da dessen Potential, in der Figur als +U_ZH bezeichnet, nun höher liegt als +U_ZL, sperrt D1 und trennt den Generator G vom dynamischen Zwischenkreis Z.

Völlig analog aufgebaut und in seiner Funktionsweise identisch arbeitet bei Bedarf auch der untere Hochsetzsteller mit der Induktivität L2 und dem Halbleiterschaltelement T5 für die negative Generatorspannung -U_ZL. Die Dioden D6 verbindet den Generator G direkt mit dem dynamischen Zwischenkreis Z, wenn der untere Hochsetzsteller nicht arbeitet, während die Diode D7 die durch den unteren Hochsetzsteller erhöhte negative Generatorspannung an den dynamischen Zwischenkreis Z leitet. Die beiden Hochsetzsteller für die positive und negative Generatorspannung sind symmetrisch zum mittleren Spannungsniveau angeordnet und bilden die Hochsetzstellerschaltung H in Figur 1. Auf diese Schaltung wird weiter unten Bezug genommen, ohne sie nochmals im Detail darzustellen.

Der dynamische Zwischenkreis Z wird mit zwei in Reihe geschalteten Kondensatoren C3 und C4 gefiltert, deren gemeinsamer Anschluss wieder ein mittleres Spannungsniveau definiert. Dieser gemeinsame Anschluss ist vorzugsweise mit dem mittleren Spannungsniveau der Hochsetzstellerschaltung H verbunden. Diese Verbindung ist nicht zwingend notwendig und deshalb in Figur 1 durch eine gestrichelte Verbindung dargestellt. Eine Erdung ist an dieser Stelle möglich, aus oben genannten Gründen wird aber im gezeigten Ausführungsbeispiel darauf verzichtet.

Auf den dynamischen Zwischenkreis Z folgt nun eine Tiefsetzstellerschaltung T, die zwei wiederum an sich bekannte Tiefsetzsteller enthalten, um die positive bzw. negative dynamische Zwischenkreisspannung +U_ZH bzw. -U_ZH durch einen gepulsten Betrieb von Halbleiterschaltelement T2 bzw. T6 bei Bedarf auf eine im Netz N gerade benötigte niedrigere Spannung U_Netz zu bringen. Während der positiven Halbwelle des Netzes N wird die Spannung dabei vom positiven Potential +U_ZH des dynamischen Zwischenkreises Z gewonnen, während der negativen Halbwelle des Netzes N vom negativen Potential -U_ZH des dynamischen Zwischenkreises Z. Der Freilauf erfolgt dabei jeweils über die entsprechend geschalteten Halbleiterschaltelemente T3 und T4 zum bzw. vom mittleren Spannungsniveau des dynamischen Zwischenkreises. Zu den Schaltelementen T3 und T4 sind hierzu Freilaufdioden D3 bzw. D4 in Serie geschaltet. Während der positiven Halbwelle der Netzspannung ist T3 leitend, T4 sperrt. Während der negativen Halbwelle sperrt T3, T4 leitet.

Die beiden Tiefsetzsteller für die positive und negative Netzspannung sind symmetrisch zum mittleren Spannungsniveau angeordnet und bilden die Tiefsetzstellerschaltung H in Figur 1.

Die eigentliche Einspeisung ins Netz N erfolgt schließlich über eine Netzdrossel L3.

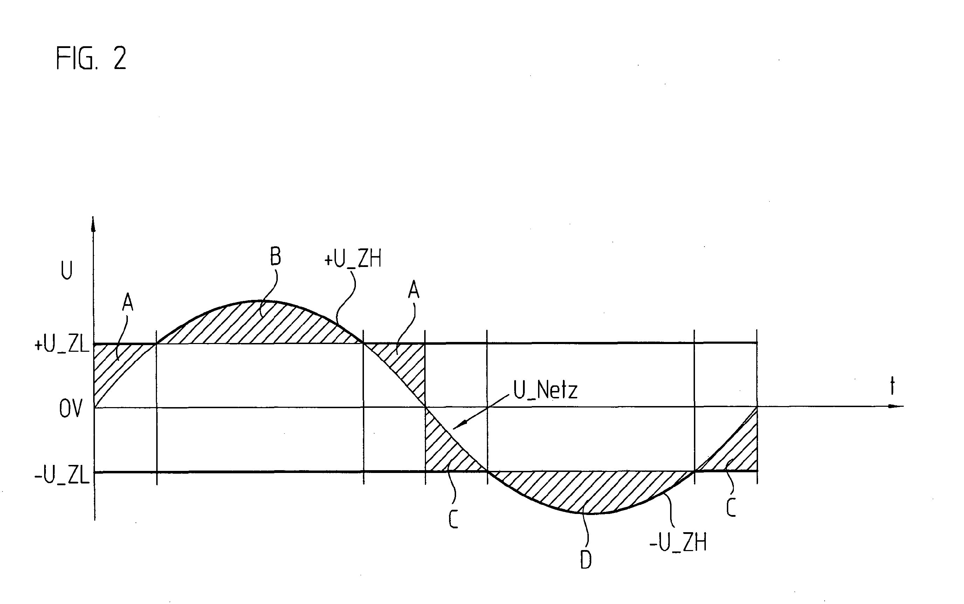

Die Figur 2 stellt die verschiedenen Betriebszustände der Solarwechselrichterschaltung für den Fall dar, dass die positive bzw. negative Generatorspannung +U_ZL bzw. -U_ZL betragsmäßig kleiner ist als die maximale positive bzw. negative Spannung im Netz N. Mit anderen Worten ist hier die Generatorspannung kleiner als das Spitze-zu-Spitze-Maximum der Netzspannung.

In den mit A bezeichneten Bereichen während der positiven Halbwelle der Netzspannung U_Netz liegt die benötigte Einspeisespannung unter der vom Generator gelieferten Spannung. Der dynamische Zwischenkreis Z wird in dieser Zeit über D1 vom Generator G geladen, das positive Zwischenkreispotential +U_ZH entspricht also der positiven Generatorspannung +U_ZL. In dieser Zeit arbeitet der obere Tiefsetzsteller der Tiefsetzstellerschaltung T, die Hochsetzstellerschaltung H ist nicht in Betrieb.

Im Bereich B während der positiven Halbwelle der Netzspannung U_Netz liegt die benötigte Einspeisespannung über der vom Generator gelieferten Spannung. Nun ist der obere Hochsetzsteller der Hochsetzstellerschaltung H in Betrieb und erhöht die positive Generatorspannung +U_ZL auf einen Wert +U_ZH, der über D2 am dynamischen Zwischenkreis anliegt, während D1 den Generator G vom dynamischen Zwischenkreis Z trennt. Der Hochsetzsteller wird dabei grade so betrieben, dass +U_ZH der aktuell benötigten Einspeisespannung entspricht. In der Figur 2 erkennt man, dass im Bereich B die dynamische Zwischenkreisspannung +U_ZH gerade dem Sinus der Netzspannung U_Netz folgt. Damit ist es nicht notwendig, die Tiefsetzstellerschaltung T zu betreiben, unnötige Schaltverluste durch einen gleichzeitigen Betrieb der Hochsetzstellerschaltung H und der Tiefsetzstellerschaltung T werden vermieden.

Zur Ansteuerung der Hochsetzsteller bzw. Tiefsetzsteller werden in bekannter Weise Regelkreise eingesetzt, die anhand der Soll- und Ist-Spannungen geeignete Ansteuermuster für die verschiedenen Halbleiterschaltelemente erregeln.

Für die negative Halbwelle der Netzspannung wiederholt sich der Betrieb der Wechselrichterschaltung in analoger Weise für die Bereiche C, in denen lediglich der untere Tiefsetzsteller der Tiefsetzstellerschaltung T in Betrieb ist, und den Bereich D, in dem lediglich der untere Hochsetzsteller der Hochsetzstellerschaltung T in Betrieb ist, um die negative Generatorspannung -U_ZL betragsmäßig gerade auf die benötigte Einspeisespannung zu erhöhen. Wieder kann durch das Bereitstellen einer sinusförmigen Spannung -U_ZH im Bereich D der gleichzeitige Betrieb der Tiefsetzstellerschaltung T vermieden werden.

Die in der Figur 1 gezeigte Schaltung eignet sich, um die Gleichspannung eines Solargenerators oder eines sogenannten Strings, also einer Reihenschaltung aus mehreren Solarmodulen, in eine Wechselspannung zur Einspeisung in eine Netzphase zu wandeln. Dies mag für kleinere Anlagen mit wenigen Kilowatt Leistung durchaus genügen. Für Fotovoltaikanlagen höherer Leistung ist aber eine Einspeisung in alle drei Phasen eines Versorgungsnetzes gefordert. Hinzu kommt, dass eine Reihenschaltung von zu vielen Solarmodulen in einem String nicht möglich ist, da die maximale Systemspannung bei Solarmodulen 1000 V (Leerlauf) nicht überschreiten darf. Die Arbeitsspannung ist somit auf etwa 750 V begrenzt. In Anlagen höherer Leistung werden daher mehrere Strings parallel betrieben. Dabei ist es wünschenswert, dass jeder String getrennt von den anderen Strings im Maximum Power Point betrieben werden kann, also Strom und Spannung für jeden String getrennt wählbar sind.

Diese Forderungen lassen sich mit der in der Figur 1 gezeigten Schaltung durch eine einfache Erweiterung erfüllen.

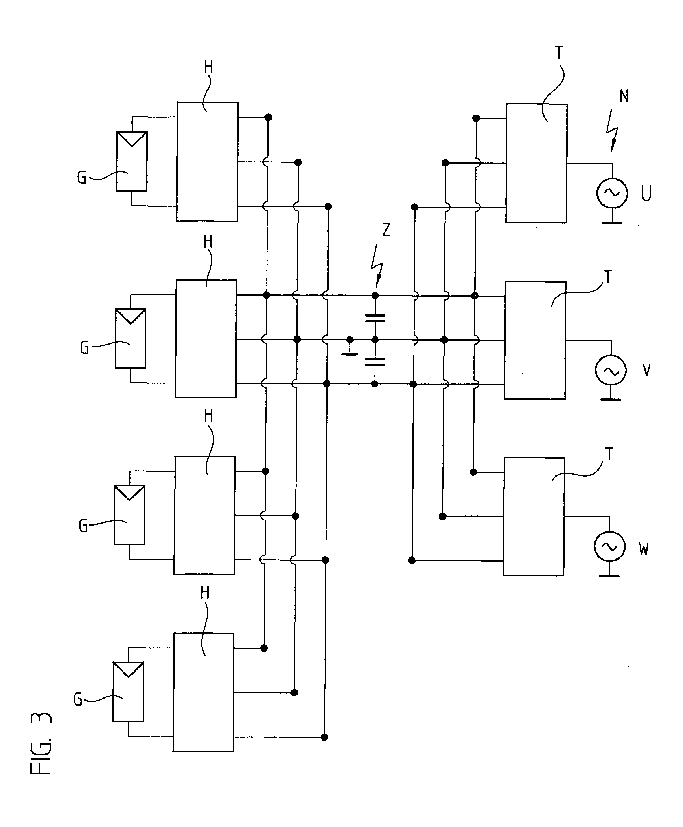

Gemäß Figur 3 wird für jeden String G (dargestellt sind vier Strings G, diese Anzahl kann aber größer oder kleiner sein) eine Hochsetzstellerschaltung H gemäß der Figur 1 bereit gestellt. Dadurch ist es möglich, jeden String G im jeweiligen Maximum Power Point zu betreiben.

Alle Hochsetzstellerschaltungen H speisen einen gemeinsamen dynamischen Zwischenkreis Z, dessen Aufbau dem der Figur 1 entspricht. Die Hochsetzstellerschaltungen sind einander sozusagen parallel geschaltet.

Dem dynamischen Zwischenkreis Z folgt für jede Phase U, V, W des Netzes N je eine Tiefsetzstellerschaltung T, aus der die jeweilige Netzphase gespeist wird. Wenn wie üblich Dreiphasennetze zu speisen sind, werden drei solcher Tiefsetzstellerschaltungen T benötig. Diese sind einander wiederum parallel geschaltet. Im Inneren sind sowohl die Hochsetzstellerschaltungen H und die Tiefsetzstellerschaltungen T aufgebaut wie in der Figur 1 dargestellt, in der Figur 3 sind daher nur noch die jeweiligen Anschlüsse und ihre Verbindung untereinander dargestellt.

Diese Art der parallelen Verschaltung von mehren Hochsetzstellerschaltungen H zur Speisung eines gemeinsamen dynamischen Zwischenkreises Z bedingt nun eine Abwandlung beim Betrieb der einzelnen Hochsetzstellerschaltungen H. Zunächst ist der String G, der aktuell die höchste Ausgangsspannung liefert, der sogenannte Masterstring. Dieser Masterstring, genauer dessen zugeordnete Hochsetzstellerschaltung H, wird so betrieben wie zur Figur 1 erklärt, jedoch gilt, dass die Hochsetzstellerschaltung H immer dann aktiv ist, wenn die Spannung dieses Masterstrings unter die höchste der drei gerade benötigten Einspeisespannungen fällt. Die Hochsetzstellerschaltung H muss jetzt also auf die aktuell höchste Spannung aller Netzphasen ausgerichtet sein. Liegt also die Stringspannung wie in der Figur 2 unterhalb der Spitzenspannung im Netz, so wird die Hochsetzstellerschaltung H wesentlich öfter und unter Umständen dauerhaft gebraucht, wobei aber weiterhin gilt, dass der jeweilige Hochsetzsteller H die Sinusform der aktuell höchsten Netzspannung nachfährt, so dass in diesem Betriebszustand zumindest für diese Phase kein Tiefsetzsteller T aktiv werden muss. Zur Speisung der übrigen Phasen ist dann aber evtl. ein gleichzeitiger Betrieb von Hochsetzstellern H und Tiefsetzstellern T notwendig, jedoch auf das Nötigste reduziert.

Für die übrigen Strings G und deren Hochsetzstellerschaltung H gilt, dass sie jederzeit die gleiche Spannung an den dynamischen Zwischenkreis Z liefern müssen wie der Masterstring. Hierzu werden die jeweiligen Hochsetzsteller H dauerhaft betrieben. Dabei erzeugen sie entweder ein konstantes Spannungsniveau - eben das des Masterstrings - oder sie folgen ebenfalls - wie der Hochsetzsteller H des Masterstrings - der Sinusform der aktuell benötigten höchsten Einspeisespannung.

Ein Vorteil der in der Figur 1 oder der Figur 3 gezeigten Schaltung ist, dass die Halbleiterschaltelemente T2, T3, T4 und T6 der Tiefsetzstellerschaltung auch so angesteuert werden können, dass die Einspeisung über das mittlere Spannungsniveau erfolgt. Beispielsweise kann bei negativer Netzspannung vom mittleren Spannungsniveau ein positiver Strom eingespeist werden, der Freilauf erfolgt dann über -U_ZH. Dadurch kann der Phasenwinkel des eingespeisten Stromes verändert werden und damit Blindleistung ans Netz abgegeben werden. Dies ist eine Forderung der Netzbetreiber, die wegen der immer größeren Beiträge von eingespeister Solar- oder Windenergie flexibler auf den jeweiligen Bedarf an Blindleistung reagieren können.

## Patentansprüche

1. Verfahren zum Betreiben eines Wechselrichters mit einer Hochsetzstellerschaltung (H), einem Zwischenkreis (Z) und einer Tiefsetzstellerschaltung (T), für das Umwandeln einer Gleichspannung (+U_ZL, -U_ZL) eines Solargenerators (G) in eine Wechselspannung (U_Netz) zum Einspeisen in ein Netz (N), wobei die Hochsetzstellerschaltung (H) die Gleichspannung (+U_ZL, -U_ZL) erhöht, wenn diese kleiner ist als ein Spitze-zu-Spitze-Maximum der Netzspannung (U_Netz), und die Tiefsetzstellerschaltung (T) eine Zwischenkreisspannung (+U_ZH, -U_ZH) bei Bedarf auf eine im Netz (N) gerade benötigte niedrigere Spannung (U_Netz) erniedrigt, **dadurch gekennzeichnet, dass** die Hochsetzstellerschaltung (H) die Gleichspannung (+U_ZL, -U_ZL) dynamisch auf den aktuell im Netz (N) benötigten Wert erhöht und dabei zeitweise einen annähernd sinusförmigen Spannungsverlauf für die Zwischenkreisspannung (+U_ZH, -U_ZH) liefert, und dass die Hochsetzstellerschaltung (H) ein positives oder negatives Spannungsniveau (+U-ZL, -U_ZL) des Solargenerators (G) gegenüber einem mittleren Spannungsniveau (0V) betragsmäßig auf den aktuell im Netz (N) benötigten Wert (U_Netz) anhebt und dadurch die dynamische Zwischenkreisspannung (+U_ZH, -U_ZH) auf diesen Wert erhöht, wenn das positive oder negative Spannungsniveau (+U_ZL, -U_ZL) betragsmäßig kleiner ist als die aktuell im Netz (N) benötigte Spannung (U_Netz) gegenüber dem mittleren Spannungsniveau (0V).

2. Verfahren nach Anspruch 1, **dadurch gekennzeichnet, dass** aus dem dynamischen Zwischenkreis (Z) mehrere, insbesondere drei Netzphasen (U, V, W) gespeist werden, wobei für jede Phase (U, V, W) eine eigene Tiefsetzstellerschaltung (T) aus dem dynamischen Zwischenkreis (Z) gespeist wird.

3. Verfahren nach Anspruch 2, **dadurch gekennzeichnet, dass** der Hochsetzsteller (H) dynamisch auf die höchste der in den Netzphasen (U, V, W) aktuell benötigte Einspeisespannung regelt, falls die Gleichspannung (+U_ZL, -U_ZL) unter dieser höchsten Einspeisespannung liegt.

4. Verfahren nach einem der Ansprüche 1-3, **dadurch gekennzeichnet, dass** mehrere Solargeneratoren (G) über eine jeweils zugeordnete Hochsetzstellerschaltung (H) den dynamischen Zwischenkreis (Z) speisen.

5. Verfahren nach Anspruch 4, **dadurch gekennzeichnet, dass** derjenige Solargenerator (G), der die aktuell höchste Gleichspannung liefert, ein Masterstring ist, und dass die den übrigen Solargeneratoren (G) zugeordneten Hochsetzstellerschaltungen (H) eine Spannung liefern, die der vom Masterstring bzw. dessen zugeordnetem Hochsetzsteller (H) an den dynamischen Zwischenkreis (Z) abgegebenen Spannung entspricht.

6. Wechselrichter mit einer Hochsetzstellerschaltung (H), einem Zwischenkreis (Z) und einer Tiefsetzstellerschaltung (T), für das Umwandeln einer Gleichspannung (+U_ZL, -U_ZL) eines Solargenerators (G) in eine Wechselspannung (U_Netz) zum Einspeisen in ein Netz (N), wobei die Hochsetzstellerschaltung (H) die Gleichspannung (+U_ZL, -U_ZL) erhöht, wenn diese kleiner ist als ein Spitze-zu-Spitze-Maximum der Netzspannung (U_Netz), und die Tiefsetzstellerschaltung (T) eine Zwischenkreisspannung (+U_ZH, -U_ZH) bei Bedarf auf eine im Netz (N) gerade benötigte niedrigere Spannung (U_Netz) erniedrigt, **dadurch gekennzeichnet, dass** die Hochsetzstellerschaltung (H) die Gleichspannung (+U_ZL, -U_ZL) dynamisch auf den aktuell im Netz (N) benötigten Wert erhöht und dabei zeitweise einen annähernd sinusförmigen Spannungsverlauf für die Zwischenkreisspannung (+U_ZH, -U_ZH) liefert, und dass die Hochsetzstellerschaltung (H) ein positives oder negatives Spannungsniveau (+U_ZL, -U_ZL) des Solargenerators (G) gegenüber einem mittleren Spannungsniveau (0V) betragsmäßig auf den aktuell im Netz (N) benötigten Wert (U_Netz) anhebt und dadurch die dynamische Zwischenkreisspannung (+U_ZH, -U_ZH) auf diesen Wert erhöht, wenn das positive oder negative Spannungsniveau (+U_ZL, -U_ZL) betragsmäßig kleiner ist als die aktuell im Netz (N) benötigte Spannung (U_Netz) gegenüber dem mittleren Spannungsniveau (0V).

7. Wechselrichter nach Anspruch 6, **dadurch gekennzeichnet, dass** mehrere Solargeneratoren (G), denen jeweils eine Hochsetzstellerschaltung (H) zugeordnet ist, den dynamischen Zwischenkreis (Z) speisen.

8. Wechselrichter nach Anspruch 6 oder 7, **dadurch gekennzeichnet, dass** aus dem dynamischen Zwischenkreis (Z) mehrere Netzphasen (U, V, W) über den Netzphasen (U, V, W) jeweils zugeordnete Tiefsetzstellerschaltungen (T) gespeist werden.

## Claims

1. Method for operating an inverter with a boost converter circuit (H), an intermediate circuit (Z) and a buck converter circuit (T), for converting a DC voltage (+U_ZL, -J_ZL) of a solar generator (G) into an AC voltage (U_network) for feeding into a network (N), wherein the boost converter circuit (H) increases the DC voltage (+U_ZL, -U_ZL) if the latter is smaller than a peak-to-peak maximum of the network voltage (U_network), and the buck converter circuit (T) reduces an intermediate circuit voltage (+U_ZH, -U_ZH), if required, to a lower voltage (U_network) presently required in the network (N), **characterized in that** the boost converter circuit (H) dynamically increases the DC voltage (+U_ZL, -U_ZL) to the value presently required in the network (N) and, in so doing, intermittently supplies an approximately sinusoidal voltage profile for the intermediate circuit voltage (+U_ZH, -U_ZH), and **in that** the boost converter circuit (H) boosts a positive or negative voltage level (+U_ZL, -U_ZL) of the solar generator (G) compared to an average voltage level (0V) according to the amount of the value (U_network) presently required in the network (N) and hence increases the dynamic intermediate circuit voltage (+U_ZH, -U_ZH) to said value if the positive or negative voltage level (+U ZL, -U_ZL) is smaller in terms of amount than the voltage (U_network) presently required in the network (N) compared to the average voltage level (0V).

2. Method according to Claim 1, **characterized in that** a plurality of, in particular three, network phases (U, V, W) are fed from the dynamic intermediate circuit (Z), wherein an individual buck converter circuit (T) for each phase (U, V, W) is fed from the dynamic intermediate circuit (Z).

3. Method according to Claim 2, **characterized in that** the boost converter (H) dynamically regulates to the highest of the feed-in voltages presently required in the network phases (U, V, W) if the DC voltage (+U_ZL, -U_ZL) is below said highest feed-in voltage.

4. Method according to any of Claims 1 to 3, **characterized in that** a plurality of solar generators (G) feed the dynamic intermediate circuit (Z) via a respectively associated boost converter circuit (H).

5. Method according to Claim 4, **characterized in that** that solar generator (G) which supplies the highest DC voltage at present is a master string, and **in that** the boost converter circuits (H) assigned to the remaining solar generators (G) supply a voltage which corresponds to the voltage output from the master string or the boost converter (H) assigned thereto to the dynamic intermediate circuit (Z).

6. Inverter with a boost converter circuit (H), an intermediate circuit (Z) and a buck converter circuit (T), for converting a DC voltage (+U_ZL, -U_ZL) of a solar generator (G) into an AC voltage (U_network) for feeding into a network (N), wherein the boost converter circuit (H) increases the DC voltage (+U_ZL, -U_ZL) if the latter is smaller than a peak-to-peak maximum of the network voltage (U_network), and the buck converter circuit (T) reduces an intermediate circuit voltage (+U_ZH, -U_ZH), if required, to a lower voltage (U_network) presently required in the network (N), **characterized in that** the boost converter circuit (H) dynamically increases the DC voltage (+U_ZL, -U_ZL) to the value presently required in the network (N) and, in so doing, intermittently supplies an approximately sinusoidal voltage profile for the intermediate circuit voltage (+U_ZH, -U_ZH), and **in that** the boost converter circuit (H) boosts a positive or negative voltage level (+U_ZL, -U_ZL) of the solar generator (G) compared to an average voltage level (0V) according to the amount of the value (U_network) presently required in the network (N) and hence increases the dynamic intermediate circuit voltage (+U_ZH, -U_ZH) to said value if the positive or negative voltage level (+U_ZL, -U_ZL) is smaller in terms of amount than the voltage (U_network) presently required in the network (N) compared to the average voltage level (0V).

7. Inverter according to Claim 6, **characterized in that** a plurality of solar generators (G) to which in each case a boost converter circuit (H) is assigned feed the dynamic intermediate circuit (Z).

8. Inverter according to Claim 6 or 7, **characterized in that** a plurality of network phases (U, V, W) are fed from the dynamic intermediate circuit (Z) via the buck converter circuits (T) which are respectively assigned to the network phases (U, V, W).

## Revendications

1. Procédé de conduite d'un onduleur doté d'un circuit (H) de relèvement de tension, d'un circuit intermédiaire (Z) et d'un circuit (T) d'abaissement de tension en vue de la conversion d'une tension continue (+U_ZL, -U_ZL) d'un générateur solaire (G) en une tension alternative (U_Netz) destiné à être injectée dans un réseau (N), le circuit (H) de relèvement de tension relevant la tension continue (+U_ZL, -U_ZL) lorsque celle-ci est plus basse que le pic maximum de la tension de réseau (U_Netz) et le circuit (T) d'abaissement de tension abaissant si nécessaire une tension (+U_ZH, -U_ZH) de circuit intermédiaire à la tension plus basse (U_Netz) exactement nécessaire pour le réseau (N),
**caractérisé en ce que**
le circuit (H) de relèvement de tension relève dynamiquement la tension continue (+U_ZL, -U_ZL) à la valeur effectivement nécessaire dans le réseau (N) et délivre une partie du temps une évolution approximativement sinusoïdale de la tension pour la tension (+U_ZH, -U_ZH) du circuit intermédiaire,
**en ce que** le circuit (H) de relèvement de tension relève la valeur absolue d'un niveau positif ou négatif de tension (+U_ZL, -U_ZL) du générateur solaire (G) par rapport à un niveau moyen de tension (0V) à la valeur (U_Netz) effectivement nécessaire dans le réseau (N) et relève ainsi la valeur absolue de la tension dynamique (+U_ZH, -U_ZH) du circuit intermédiaire lorsque la
valeur absolue du niveau positif ou négatif de tension (+U_ZL, -U_ZL) a une valeur plus basse que la tension (U_Netz) effectivement nécessaire dans le réseau (N) par rapport au niveau moyen de tension (0V).

2. Procédé selon la revendication 1, **caractérisé en ce que** plusieurs et en particulier trois phases (U, V, W) du réseau sont alimentées par le circuit intermédiaire dynamique (Z), un circuit propre (T) d'abaissement de tension de chaque phase (U, V, W) étant alimenté par le circuit intermédiaire dynamique (Z).

3. Procédé selon la revendication 2, **caractérisé en ce que** le releveur de tension (H) régule dynamiquement la tension d'alimentation la plus élevée effectivement nécessaire dans les phases (U, V, W) du réseau au cas où la tension continue (+U_ZL, -U_ZL) est située en dessous de cette plus haute tension d'alimentation.

4. Procédé selon l'une des revendications 1 à 3, **caractérisé en ce que** plusieurs générateurs solaires (G) alimentent le circuit intermédiaire dynamique (Z) par l'intermédiaire d'un circuit (H) de relèvement de tension respectivement associé à chacun d'eux.

5. Procédé selon la revendication 4, **caractérisé en ce que** le générateur solaire (G) qui délivre la tension continue la plus élevée à un instant est un barreau maître et **en ce que** les circuits (H) de relèvement de tension associés aux autres générateurs solaires (G) délivrent une tension qui correspond à la tension délivrée par le barreau maître ou son releveur de tension (H) associé au circuit intermédiaire dynamique (Z).

6. Onduleur doté d'un circuit (H) de relèvement de tension, d'un circuit intermédiaire (Z) et d'un circuit (T) d'abaissement de tension, pour la conversion d'une tension continue (+U_ZL, -U_ZL) d'un générateur solaire (G) en une tension alternative (U_Netz) qui alimente un réseau (N), le circuit (H) de relèvement de tension relevant la tension continue (+U_ZL, -U_ZL) lorsque celle-ci est plus petite que le pic maximum de la tension (U_Netz) du réseau, le circuit (T) d'abaissement de tension abaissant si nécessaire la tension (+U_ZH, -U_ZH) d'un circuit intermédiaire à la tension plus basse (U_Netz) nécessaire dans le réseau (N),
**caractérisé en ce que**
le circuit (H) de relèvement de tension relève dynamiquement la tension continue (+U_ZL, -U_ZL) à la valeur effectivement nécessaire dans le réseau (N) et délivre une partie du temps une évolution approximativement sinusoïdale de la tension pour la tension (+U_ZH, -U_ZH) du circuit intermédiaire,
**en ce que** le circuit (H) de relèvement de tension relève la valeur absolue d'un niveau positif ou négatif de tension (+U_ZL, -U_ZL) du générateur solaire (G) par rapport à un niveau moyen de tension (0V) à la valeur (U_Netz) effectivement nécessaire dans le réseau (N) et relève ainsi la valeur absolue de la tension dynamique (+U_ZH, -U_ZH) du circuit intermédiaire lorsque la valeur absolue du niveau positif ou négatif de tension (+U_ZL, -U_ZL) a une valeur plus basse que la tension (U_Netz) effectivement nécessaire dans le réseau (N) par rapport au niveau moyen de tension (0V).

7. Onduleur selon la revendication 6, **caractérisé en ce que** plusieurs générateurs solaires (G) à chacun desquels est associé un circuit (H) de relèvement de tension alimentent le circuit intermédiaire dynamique (Z).

8. Onduleur selon les revendications 6 ou 7, **caractérisé en ce que** plusieurs phases (U, V, W) du réseau sont alimentées par le circuit intermédiaire dynamique (Z), par l'intermédiaire de circuits (T) d'abaissement de tension associés à chaque phase (U, V, W).
